# EUROPÄISCHE PATENTSCHRIFT

(11) **EP 1 778 996 B1**
(45) Veröffentlichungstag und Bekanntmachung des Hinweises auf die Patenterteilung: **19.03.2008**
(21) Anmeldenummer: 05821834.8
(22) Anmeldetag: 12.12.2005
(51) Int. Cl.: F16D 33/12

(54) **HYDRODYNAMISCHE KUPPLUNG**
HYDRODYNAMIC COUPLING
EMBRAYAGE HYDRODYNAMIQUE

(30) Priorität: 10.12.2004 DE 102004059833
(43) Veröffentlichungstag der Anmeldung: 02.05.2007
(73) Patentinhaber: Voith Turbo GmbH & Co. KG, 89522 Heidenheim (DE)
(72) Erfinder: KLEY, Markus, 73479 Ellwangen (DE); PITTIUS, Reinhold, 74564 Crailsheim (DE); ADLEFF, Kurt, 74564 Crailsheim (DE)
(74) Vertreter: Schmidt, Sven Hendrik
(86) Internationale Anmeldenummer: PCT/EP2005/013321
(87) Internationale Veröffentlichungsnummer: WO 2006/061252

(56) Entgegenhaltungen:
- FR-A- 1 016 938
- GB-A- 2 227 078
- US-A- 2 873 831

## Beschreibung

Die Erfindung betrifft eine hydrodynamische Kupplung und insbesondere ein Kraftfahrzeugdruckluftsystem mit einer solchen hydrodynamischen Kupplung.

Hydrodynamische Kupplungen sind in einer Vielzahl von Ausführungen und in verschiedenen Anwendungen, insbesondere im Kraftfahrzeugbereich, bekannt. In jüngerer Zeit wurde beispielsweise vorgeschlagen, eine hydrodynamische Kupplung im Antriebsstrang zwischen einem Kraftfahrzeugmotor, in der Regel ein Verbrennungsmotor, und einem Luftkompressor des Fahrzeugdruckluftsystems vorzusehen, um so den Kompressor über die hydrodynamische Kupplung ein- und auszuschalten. Gemäß einer besonderen Ausführung betrifft die vorliegende Erfindung eben ein solches Fahrzeugdruckluftsystem, insbesondere für Kraftfahrzeuge, wie LKWs.

Ein solcher Kompressor, auch Luftverdichter genannt, in einem Fahrzeug ist für eine bestimmte Betriebsdrehzahl ausgelegt, beziehungsweise für einen Drehzahlbereich unterhalb einer Maximaldrehzahl, die zumindest nicht dauerhaft überschritten werden sollte. Beispielsweise sind 3000 Umdrehungen pro Minute dauerhaft für einen solchen Kompressor zugelassen, wobei der Kompressor kurzzeitig auch 3500 Umdrehungen pro Minute erreichen darf. Dies trifft insbesondere für Hubkolben-Luftverdichter zu. Die erfindungsgemäße Kupplung soll beispielsweise für einen solchen Kompressor ausgelegt sein.

In der Praxis hat sich aufgrund von Bauraum und Effizienz als sinnvoll erwiesen, dass bei Verwendung einer hydrodynamischen Kupplung im Antriebsstrang zwischen dem Kraftfahrzeugmotor und dem Kompressor die Antriebsdrehzahl der Kupplung durch Anpassen der Übersetzung erhöht wird. Dies kann zu Betriebszuständen führen, bei welchen die Pumpenseite im Luftförderbetrieb bis zu 4500 Umdrehungen pro Minute erreicht. Bei einem normalen Schlupf in der Kupplung überschreitet dementsprechend auch die Turbinenseite, welche in der Regel mit derselben Drehzahl wie die Eingangswelle des Kompressors umläuft, die genannte maximal zulässige Drehzahl. Es sind daher Maßnahmen notwendig, um den Kompressor vor einer entsprechenden Überdrehzahl zu schützen.

Zwar ist es grundsätzlich bekannt, mittels einer hydrodynamischen Kupplung die Drehzahl einer Arbeitsmaschine durch Einstellen des Füllungsgrades der hydrodynamischen Kupplung, welche zwischen die Antriebsmaschine und die Arbeitsmaschine geschaltet ist, zu regeln, siehe beispielsweise die Offenlegungsschrift WO 98/32987. Die Füllungssteuerung erfolgt dabei im wesentlichen dadurch, dass bei Erreichen eines maximalen Füllungsgrades des Arbeitsraums die Arbeitsmediumzufuhr unterbrochen wird.

Die bekannte Füllungsmengenregelung ist jedoch hinsichtlich des apparativen Aufbaus kompliziert und erfordert verschiedene Regelungskomponenten, wie Drucksensoren, Ventile und/oder Schöpfrohre. Insbesondere bei einem Einsatz einer hydrodynamischen Kupplung in einem Fahrzeug, vorteilhaft in dem Antriebsstrang zwischen einem Luftverdichter und dem Antriebsmotor, um den Luftverdichter ein- und ausschalten zu können, und um gleichzeitig Schwingungen zu dämpfen und eine Übertragung von Drehmoment von dem Luftverdichter auf den Antriebsmotor beziehungsweise das Getriebe des Antriebsmotors zu vermeiden, ist der bekannte Aufbau von füllungsgeregelten hydrodynamischen Schaltkupplungen zu kompliziert und für eine Drehzahlüberwachung der Arbeitsmaschine, insbesondere des Luftverdichters, nicht optimal geeignet.

Das Dokument US 2 873 831 A beschreibt eine hydrodynamische Kupplung mit einem Fliehkraftventil, das mit der Drehzahl des Pumpenrads der hydrodynamischen Kupplung umläuft. Somit kann trotz steigender Drehzahl der Antriebsmaschine verhindert werden, dass die Drehzahl der Arbeitsmaschine weiter ansteigt.

Die Dokumente FR 1 016 938 A und GB 2 227 078 A beschreiben ebenfalls hydrodynamische Kupplungen mit Ventilen zum Entleeren des Arbeitsraums.

Zum Entleeren einer hydrodynamischen Kupplung, um das Turbinenrad still zu setzen, schlägt die Offenlegungsschrift DE 32 17 465 A1 vor, im Kupplungsgehäuse mehrere Ausflussöffnungen anzuordnen, die durch Ventile gesteuert werden. Diese Ventile werden durch einen Steuerdruck in zu den Ventilen führenden Leitungen zum Füllen der Kupplung geschlossen und öffnen sich zum Entleeren bei ausbleibendem Steuerdruck wegen der auf ihren Ventilkörper einwirkenden Fliehkraft. Die Ventilkörper sind daher auf der radial innenliegenden Seite durch das Arbeitsmedium aus dem Arbeitsraum der Kupplung beaufschlagt und auf ihrer radial außenliegenden Seite ebenfalls durch Arbeitsmedium, welches beim Einschalten der Kupplung in die entsprechenden Leitungen geführt wird, wenn sich die Kupplung füllt. Eine selbstschaltende Drehzahlregelung der hydrodynamischen Kupplung ist durch diese Ventile nicht möglich, da zum Öffnen der Ventile stets mittels einer äußeren Schaltung der Steuerdruck, welcher radial von außen auf den Ventilkörper wirkt, dadurch abgebaut werden muss, dass Arbeitsmedium in die hydrodynamische Kupplung und damit den Arbeitsraum zugeführt wird. Diese Ausführung ist daher zur Drehzahlbegrenzung einer Arbeitsmaschine ungeeignet.

Die aus dem Dokument DE 32 17 465 A1 bekannten Merkmale sind im Oberbegriff von Anspruch 1 zusammengefasst.

Der Erfindung liegt die Aufgabe zugrunde, eine hydrodynamische Kupplung und insbesondere ein Fahrzeugdruckluftsystem mit einer solchen hydrodynamischen Kupplung anzugeben, bei welcher/welchem eine angeschlossene Arbeitsmaschine beziehungsweise ein Luftverdichter effektiv vor einer Überdrehzahl geschützt wird, wobei zugleich insbesondere eine besonders große Übersetzung im Vergleich zum Stand der Technik zwischen dem Verbrennungsmotor beziehungsweise dem daran angeschlossenen Getriebe und dem Luftverdichter vorgesehen werden kann, um den Luftverdichter im Luftförderbetrieb grundsätzlich mit einer im Vergleich zum Stand der Technik höheren Drehzahl zu betreiben.

Die erfindungsgemäße Aufgabe wird durch eine hydrodynamische Kupplung gemäß Anspruch 1 und insbesondere ein Fahrzeugdruckluftsystem gemäß Anspruch 15 gelöst. Die abhängigen Ansprüche beschreiben vorteilhafte und besonders zweckmäßige Ausgestaltungen der Erfindung.

Die erfindungsgemäße hydrodynamische Kupplung weist ein Pumpenrad und ein Turbinenrad auf, die miteinander einen torusförmigen Arbeitsraum ausbilden, der mit einem Arbeitsmedium befüllt oder befüllbar ist, um Antriebsleistung vom Pumpenrad auf das Turbinenrad zu übertragen. Die Kupplung kann somit als Konstantfüllungskupplung oder als Durchflusskupplung ausgeführt sein. Bei einer Konstantfüllungskupplung verbleibt das Arbeitsmedium ständig innerhalb der hydrodynamischen Kupplung, die beispielsweise einen Ausgleichsraum für das Arbeitsmedium aufweist, das aus dem Arbeitsraum herausbefördert wird. Bei einer Durchflusskupplung hingegen ist ein externer Kreislauf vorgesehen, so dass das Arbeitsmedium in diesem Kreislauf in die Kupplung hinein und aus dieser wieder heraus gefördert wird und in der Regel außerhalb der hydrodynamischen Kupplung gekühlt wird. Konstantfüllungskupplungen kommen ohne einen solchen externen Kreislauf aus.

Das Pumpenrad der hydrodynamischen Kupplung ist in eine Triebverbindung mit einer Antriebsmaschine, insbesondere einem Verbrennungsmotor eines Kraftfahrzeuges, bringbar oder steht in einer solchen Triebverbindung. Das Turbinenrad der hydrodynamischen Kupplung ist in eine Triebverbindung mit einer Arbeitsmaschine, insbesondere einem Luftverdichter, beispielsweise Hubkolben-Luftverdichter, eines Fahrzeugluftsystems bringbar oder steht in einer solchen Triebverbindung.

Bei der erfindungsgemäßen hydrodynamischen Kupplung handelt es sich um eine sogenannte Kupplung mit Innenradantrieb, das heißt das Pumpenrad wird von einem Kupplungsgehäuse umschlossen, wobei das letztere mit der Drehgeschwindigkeit des Turbinenrades umläuft. Beispielsweise ist das Turbinenrad drehfest an einer Kupplungsschale angeschlossen und bildet zusammen mit dieser das Kupplungsgehäuse aus. Alternativ kann ein Kupplungsgehäuse vorgesehen sein, das sowohl Pumpenrad als auch Turbinenrad umschließt, und in welches das Turbinenrad drehfest eingesetzt ist, oder mit welchem das Turbinenrad integral beziehungsweise einstückig ausgebildet ist.

Im Kupplungsgehäuse ist im Bereich seines äußeren Umfangs ein Fliehkraftventil oder eine Vielzahl von Fliehkraftventilen eingesetzt. Jedes Fliehkraftventil weist einen fliehkraftbetätigten Ventilkörper auf, welcher derart in einen Auslaß des Kupplungsgehäuses für Arbeitsmedium aus dem Arbeitsraum geschaltet ist, dass der Ventilkörper den Auslaß im geschlossenen Zustand des Fliehkraftventils, das heißt wenn keine oder nur eine geringe Radialkraft nach außen auf ihn wirkt, geschlossen hält, wohingegen der Ventilkörper den Auslaß freigibt beziehungsweise das Fliehkraftventil öffnet, wenn die Radialkraft nach außen, die auf den Ventilkörper wirkt, einen vorbestimmten Wert überschreitet. Hierzu ist der Ventilkörper des Fliehkraftventils ausschließlich auf seiner radial innenliegenden Seite mit Arbeitsmedium beaufschlagt, und auf seiner radial außenliegenden Seite ausschließlich durch wenigstens ein elastisches, mechanisches Druckelement oder eine Vielzahl solcher elastischen, mechanischen Druckelemente, welches/welche in Schließrichtung des Fliehkraftventils wirkt/wirken.

Der Auslaß für Arbeitsmedium aus dem Arbeitsraum beziehungsweise die Auslässe für Arbeitsmedium aus dem Arbeitsraum werden somit in Abhängigkeit der radial nach außen auf den Ventilkörper wirkenden Kraft geöffnet beziehungsweise geschlossen. Diese radial nach außen wirkende Kraft ergibt sich insbesondere durch Addition der Fliehkraft, die auf den Ventilkörper wirkt, und des Druckes, welchen das den Ventilkörper beaufschlagende Arbeitsmedium auf den Ventilkörper ausübt. Eine oder in der Regel beide Kräfte sind von der Drehzahl des Kupplungsgehäuses und somit des Turbinenrades abhängig.

Wenn die Arbeitsmaschine mit derselben Drehzahl wie das Kupplungsgehäuse dreht, beziehungsweise mit einer Drehzahl, welche proportional zu der Drehzahl des Kupplungsgehäuses ist, so erfolgt die Regelung des Überdrehzahlschutzes, welcher durch das erfindungsgemäß eingebrachte Fliehkraftventil zur Verfügung gestellt wird, direkt in Abhängigkeit der Drehzahl der Arbeitsmaschine, insbesondere in Abhängigkeit des Luftverdichters eines Fahrzeugdruckluftsystems, insbesondere eines Hubkolben-Luftverdichters. Die Reaktionszeit einer solchen Regelung ist äußerst kurz, und die Öffnungsdrehzahl der Fliehkraftventile beziehungsweise des Fliehkraftventils wird im wesentlichen oder vollständig unabhängig vom Schlupfzustand der hydrodynamischen Kupplung eingestellt, beziehungsweise nicht proportional zu der Drehzahl des Pumpenrades.

Der Vorteil des Einsatzes des oder der Fliehkraftventile in einem Kupplungsgehäuse, das mit der Drehzahl des Turbinenrades umläuft, das heißt bei einer sogenannten Kupplung mit Innenradantrieb, hat gegenüber einer Kupplung mit Außenradantrieb, bei welcher das Gehäuse mit der Drehzahl des Pumpenrades umläuft, den Vorteil, dass keine Verzerrung der Auslösedrehzahl des Fliehkraftventils dadurch erfolgt, dass mit zunehmender Drehzahl der hydrodynamischen Kupplung der Schlupf in der Regel geringer wird, und somit das Verhältnis zwischen der Drehzahl des Pumpenrades und des Turbinenrades abnimmt.

Gemäß einer Ausführung umfasst die hydrodynamische Kupplung einen Ringraum, der im Bereich des äußeren Umfangs des Kupplungsgehäuses ausgebildet ist, und in welchen Arbeitsmedium aus dem Arbeitsraum der hydrodynamischen Kupplung strömt, beispielsweise über entsprechend angeordnete Bohrungen im Turbinenrad. Der oder die Auslässe, in welchen jeweils ein Fliehkraftventil angeordnet ist, können in diesem Ringraum münden.

Gemäß einer Ausführung sind zusätzlich zu dem oder den Auslässen mit jeweils einem Fliehkraftventil einer oder mehrere weitere Arbeitsmediumauslässe vorgesehen, die parallel zu dem oder den Auslässen mit dem Fliehkraftventil geschaltet sind, und welche vorteilhaft ebenfalls in dem genannten Ringraum münden. Die zusätzlichen Arbeitsmediumauslässe können beispielsweise in Axialrichtung oder in Radialrichtung in dem Gehäuse eingebracht sein, insbesondere senkrecht oder im wesentlichen senkrecht beziehungsweise parallel oder im wesentlichen parallel zu der Drehachse der hydrodynamischen Kupplung. Die weiteren Arbeitsmediumauslässe sind frei von einem Fliehkraftventil und weisen insbesondere einen stets geöffneten Querschnitt zum Auslassen von Arbeitsmedium aus dem Arbeitsraum auf, das heißt ihr Querschnitt wird durch keinerlei Ventil oder Klappe oder dergleichen versperrt.

Um eine Hysterese beim Schließen des Fliehkraftventils vollständig oder teilweise zu kompensieren, ist der wenigstens eine Auslaß mit dem Fliehkraftventil vorteilhaft gegenüber der Radialrichtung der hydrodynamischen Kupplung in Umfangsrichtung geneigt in das Kupplungsgehäuse eingebracht. Die Neigung ist dabei, radial von außen nach innen gesehen, in Drehrichtung des Turbinenrades beziehungsweise des Kupplungsgehäuses ausgeführt. Hierdurch wird erreicht, dass bei einer Beschleunigung des Turbinenrades die Massenträgheit, welche auf den Ventilkörper wirkt, eine Kraft in Öffnungsrichtung des Fliehkraftventils auf den Ventilkörper ausübt. Das Fliehkraftventil öffnet demnach bei einer Beschleunigung des Turbinenrades der hydrodynamischen Kupplung bei unveränderten anderen Randbedingungen früher als ein in Radialrichtung eingebrachtes Fliehkraftventil.

Selbstverständlich ist es auch möglich, die Neigung des Fliehkraftventils beziehungsweise des Auslasses mit dem Fliehkraftventil entgegengesetzt der beschriebenen Ausführung, das heißt entgegen der Drehrichtung des Turbinenrades auszuführen, so dass beim Beschleunigen des Turbinenrades das Öffnen des Fliehkraftventils verzögert wird, beziehungsweise beim Verzögern des Turbinenrades das Öffnen beschleunigt wird.

Auch der oder die weiteren Arbeitsmediumauslässe können entsprechend gegenüber der Radialrichtung der hydrodynamischen Kupplung in Umfangsrichtung geneigt in das Kupplungsgehäuse eingebracht werden, wobei die Neigung radial von außen nach innen gesehen in Drehrichtung oder entgegen der Drehrichtung des Turbinenrades ausgeführt werden kann.

Wenn eine Vielzahl von Fliehkraftventilen in die hydrodynamische Kupplung beziehungsweise deren Kupplungsgehäuse eingebracht sind, können Maßnahmen getroffen werden, damit die einzelnen Fliehkraftventile beziehungsweise Gruppen von Fliehkraftventilen bei verschiedenen Drehzahlen öffnen. Dies kann beispielsweise durch Vorsehen verschiedener Massen der Ventilkörper und/oder verschiedener Federstärken der elastischen, mechanischen Druckelemente ausgeführt werden.

Zusätzlich oder alternativ zu dem Fliehkraftventil in dem oder den Auslässen des Kupplungsgehäuses können auch ein oder mehrere Fliehkraftventile, welche beispielsweise entsprechend der hier beschriebenen Fliehkraftventile für die Auslässe ausgebildet sind, in einem oder mehreren Zuläufen für Arbeitsmedium in den Arbeitsraum der hydrodynamischen Kupplung vorgesehen sein. Wenn ein solches Fliehkraftventil in einem oder mehreren Zuläufen derart eingebracht ist, dass es aufgrund der zunehmenden Fliehkraft mit zunehmender Drehzahl öffnet, so wird der Füllungsgrad der hydrodynamischen Kupplung mit zunehmender Drehzahl ab dem oder in dem Drehzahlbereich des Öffnens des Ventils überproportional erhöht. Wenn das oder die Fliehkraftventile hingegen derart eingebracht sind, dass sie mit zunehmender Drehzahl schließen, so wird entsprechend der Füllungsgrad der hydrodynamischen Kupplung in diesem Bereich unterproportional erhöht. Hierdurch ist eine Modifikation des üblichen sich einstellenden Füllungsgrades einer hydrodynamischen Kupplung, welche ohne Fliehkraftventile im Zulauf ausgebildet ist, möglich.

Wie auch bei dem oder den Fliehkraftventilen im Auslaß können das oder die Fliehkraftventile in einem oder mehreren Zuläufen vorgesehen sein, die parallel zu weiteren nicht verschließbaren Zuläufen vorgesehen sind. Hierdurch wird durch Schalten des oder der Fliehkraftventile eine Veränderung des Zulaufquerschnittes erreicht, wobei der Zulaufquerschnitt stets größer als Null ist.

Durch das erfindungsgemäße Vorsehen von einem oder mehreren Fliehkraftventilen im Zulauf oder Ablauf für Arbeitsmedium in den Arbeitsraum beziehungsweise aus dem Arbeitsraum der hydrodynamischen Kupplung kann somit der Verlauf der Kennlinie einer hydrodynamischen Kupplung über der Drehzahl gezielt modifiziert werden.

Ein weiterer Vorteil der erfindungsgemäßen Ausgestaltung ist, dass durch das Verhindern von unerwünschten Überdrehzahlen der Turbinenseite der hydrodynamischen Kupplung der Antrieb der hydrodynamischen Kupplung und damit einer nachgeordneten Arbeitsmaschine, insbesondere eines Luftverdichters, durch die Wahl einer größeren Übersetzung, zum Beispiel von mehr als 1,27, 1,5 oder 1,7, insbesondere von 1,76, grundsätzlich auf höhere Drehzahlen ausgelegt werden kann. Hierdurch wird der Schlupf der hydrodynamischen Kupplung vermindert und der Profildurchmesser der Schaufelprofile beziehungsweise der Außendurchmesser der hydrodynamischen Kupplung kann kleiner als bei bekannten hydrodynamischen Kupplungen ausgeführt werden, um dasselbe Antriebsergebnis zu erreichen.

Die Erfindung soll nachfolgend anhand von Ausführungsbeispielen exemplarisch erläutert werden.

Es zeigen:
- Figur 1: einen Querschnitt durch eine erfindungsgemäß ausgeführte hydrodynamische Kupplung mit einem im Kupplungsgehäuse eingebrachten Fliehkraftventil;
- Figur 1a: schematisch eine alternative Gehäusegestaltung;
- Figur 2: eine schematische Darstellung der Neigung eines Auslasses mit einem Fliehkraftventil in Umfangsrichtung des Gehäuses;
- Figur 3: zwei Ausführungsbeispiele für Fliehkraftventile mit Ventilkörpern in schematischer Darstellung.

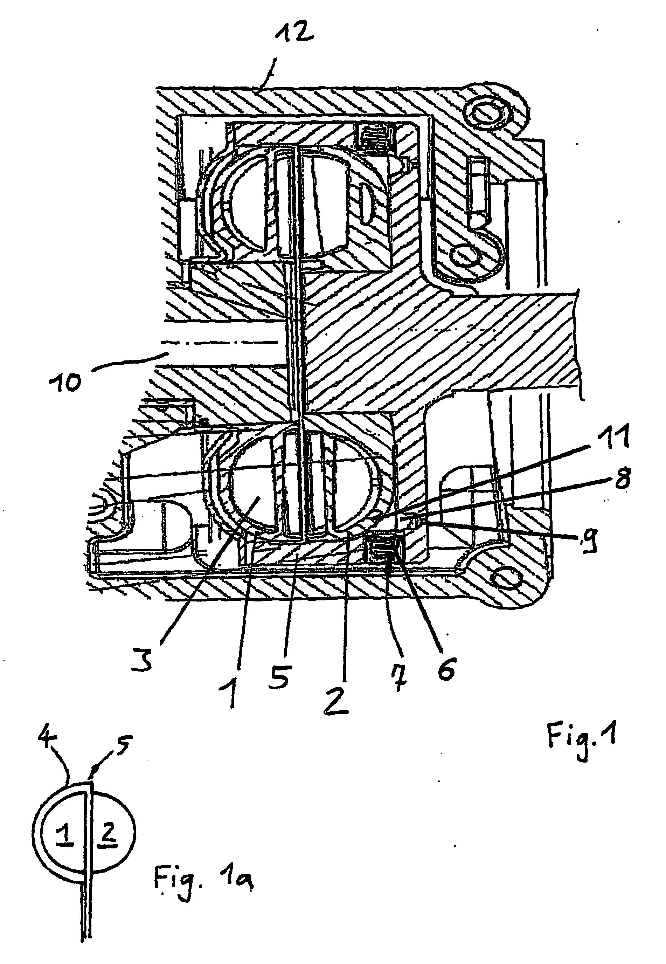

In der Figur 1 erkennt man das Pumpenrad 1 und das Turbinenrad 2, welche miteinander einen torusförmigen Arbeitsraum 3 ausbilden. Das Turbinenrad 2 ist in ein Gehäuse 5 eingesetzt und drehfest an diesem angeschlossen. Vorliegend berührt das Turbinenrad 2 mit seinem äußeren Umfang die radial äußere Innenseite des Gehäuses 5 und mit seiner Hinterseite die stirnseitige Innenseite des Gehäuses 5, wobei die beiden genannten, von dem Turbinenrad 2 berührten Innenseiten des Gehäuses 5 senkrecht aufeinander stehen.

Aufgrund der beschriebenen und dargestellten Ausführung des Gehäuses 5 und der im Querschnitt im radial äußeren Bereich des Turbinenrades 2 abgerundet ausgeführten Rückseite desselben wird zwischen der Rückseite des Turbinenrades 2 und der Innenseite des Gehäuses 5 ein Ringraum 8 ausgebildet.

An dem axial entgegengesetzten Ende umschließt das Gehäuse 5 das Pumpenrad 1 derart, dass sich das Pumpenrad 1 gegenüberstehend dem Turbinenrad 2 und innerhalb des Gehäuses 5 relativ zu dem Turbinenrad 2 und dem Gehäuse 5 drehen kann.

Im Kupplungsbetrieb strömt Arbeitsmedium über den Einlaß 10 in den Arbeitsraum 3. Der Einlaß 10 ist teilweise in Form einer Axialbohrung durch die Welle, welche das Pumpenrad 1 trägt, geführt und mündet durch einen radial nach außen gerichteten Abschnitt im Arbeitsraum 3. Aus dem Arbeitsraum 3 strömt das Arbeitsmedium durch eine oder in der Regel eine Vielzahl von Bohrungen 11 durch die Schale des Turbinenrades 2, das heißt die Bohrungen 11 münden auf der Rückseite des Turbinenrades 2 im Ringraum 8.

Das Arbeitsmedium kann somit im Ringraum 8 einen Arbeitsmediumring ausbilden und strömt weiter durch die vorliegend in Axialrichtung der hydrodynamischen Kupplung eingebrachten Arbeitsmediumauslässe 9. Die Arbeitsmediumauslässe 9 weisen einen stets geöffneten Querschnitt auf und sind in Form von Bohrungen stirnseitig im Kupplungsgehäuse 5 eingebracht, derart, dass sie im Ringraum 8 münden. Alternativ zu der gezeigten Ausführung können die Arbeitsmediumauslässe 9 beispielsweise auch in Radialrichtung verlaufen, oder geneigt zu der Axialrichtung und/oder der Radialrichtung.

Zusätzlich zu den Arbeitsmediumauslässen 9 sind eine Vielzahl von Auslässen 7 mit jeweils einem Fliehkraftventil 6 vorgesehen. Die Auslässe 7 sind im Bereich des äußeren Umfangs in Form von Radialbohrungen im Kupplungsgehäuse 5 eingebracht. Bei der gezeigten Ausführung sind die Auslässe 7 mit den Fliehkraftventilen 6 unmittelbar radial außerhalb des Turbinenrades 2 und/oder des Ringkanals 8 angeordnet und münden im Ringkanal 8.

Oberhalb einer vorgegebenen Drehzahl, beispielsweise von 3000, 3500 oder in einem Bereich zwischen diesen beiden Werten, öffnen die Fliehkraftventile 6 und geben zusätzlich zu den Arbeitsmediumauslässen 9 Strömungsquerschnitte frei, um Arbeitsmedium aus dem Gehäuse 5 der hydrodynamischen Kupplung auszutragen.

Das aus dem Kupplungsgehäuse 5 ausgetragene Arbeitsmedium wird in einer Wanne 12 aufgefangen, welche die hydrodynamische Kupplung umschließt und beispielsweise Teil eines Motorgehäuses und/oder eines Getriebegehäuses oder an diesem angeschlossen sein kann.

In der Figur 1a ist schematisch ein Turbinenrad 2 gezeigt, das zusammen mit einer Kupplungsschale 4 das Kupplungsgehäuse 5 ausbildet, welches das Pumpenrad 1 umschließt. Das Turbinenrad 2 wird demnach nicht von einem separaten Kupplungsgehäuse 5 umschlossen, sondern ist Teil desselben.

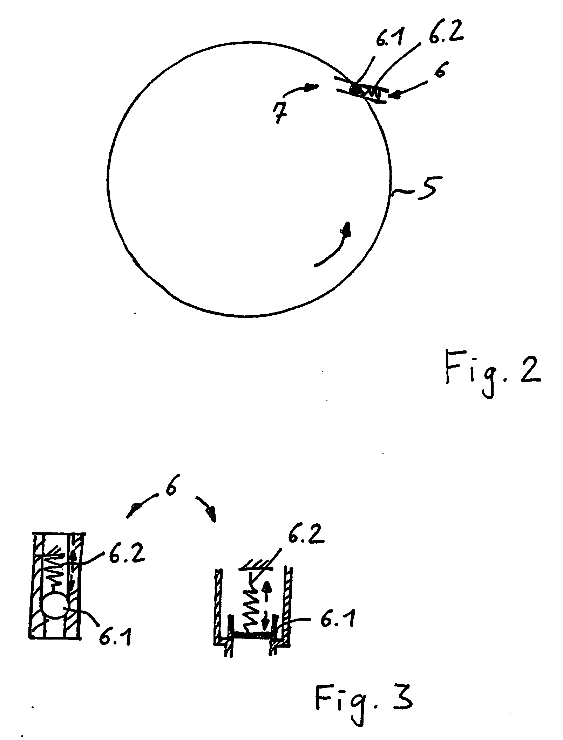

In der Figur 2 ist in einem schematischen Radialschnitt eine mögliche Neigung eines Auslasses 7 für Arbeitsmedium aus dem Arbeitsraum dargestellt, in welchen erfindungsgemäß ein Fliehkraftventil 6 eingebracht ist. Aufgrund der,Drehrichtung des Kupplungsgehäuses 5, siehe den Pfeil, bewirkt die Massenträgheit des Ventilkörpers 6.1, dass dieser bei einer Drehbeschleunigung des Kupplungsgehäuses 5 durch die Massenträgheit entgegen der Kraftwirkung des Druckelementes 6.2, hier eine Druckfeder, in die Richtung des Öffnens gedrückt wird.

In der Figur 3 sind mögliche Ausgestaltungen von Fliehkraftventilen 6 mit einem Ventilkörper 6.1 und einem Druckelement 6.2 gezeigt. Das Druckelement 6.2 ist jeweils als Druckfeder, insbesondere als Spiraldruckfeder ausgeführt. Gemäß der links dargestellten Ausführung ist der Ventilkörper 6.1 in Form einer massiven Kugel, das heißt Vollkugel, ausgeführt. In der rechts gezeigten Ausführung ist der Ventilkörper 6.1 in Form eines Bechers ausgeführt, wobei der Becherboden durch das Druckelement 6.2 derart beaufschlagt wird, dass er mit seiner Unterseite gegen einen Ventilsitz des Fliehkraftventils 6 gedrückt wird.

Entsprechend wird auch der Ventilkörper 6.1 in Form einer Kugel in der links gezeigten Ausführung durch das elastische, mechanische Druckelement 6.2 gegen einen Ventilsitz gedrückt, um das Fliehkraftventil 6 zu schließen.

Mit der vorliegenden Erfindung kann somit eine drehzahlbegrenzte Kupplung mit selbstschaltenden Fliehkraftventilen geschaffen werden, das heißt die Fliehkraftventile öffnen und schließen ausschließlich aufgrund der Drehzahl des Gehäuses, in welches sie eingebracht sind, ohne dass sie durch eine fremdgesteuerte Steuervorrichtung geschaltet werden, beispielsweise indem sie mit einer Steuerflüssigkeit beaufschlagt werden oder elektromagnetisch oder mechanisch geöffnet und geschlossen werden.

Besonders geeignet ist die erfindungsgemäße Kupplung zur Verwendung in einem Antriebsstrang für einen Luftverdichter, insbesondere Hubkolben-Verdichter. Auch andere Verwendungen sind möglich, insbesondere im Kraftfahrzeugbereich, beispielsweise im Antriebstrang eines Lüfters beziehungsweise Ventilators und/oder einer Wasserpumpe insbesondere des Fahrzeugkühlkreislaufes.

## Patentansprüche

1. Hydrodynamische Kupplung
1.1 mit einem Pumpenrad (1), das mit einer Antriebsmaschine in einer Triebverbindung steht oder bringbar ist;
1.2 mit einem Turbinenrad (2), das mit einer Arbeitsmaschine in einer Triebverbindung steht oder bringbar ist;
1.3 das Pumpenrad (1) und das Turbinenrad (2) bilden miteinander einen torusförmigen Arbeitsraum (3) aus, der mit einem Arbeitsmedium befüllt oder befüllbar ist, um Antriebsleistung vom Pumpenrad (1) auf das Turbinenrad (2) zu übertragen;
1.4 das Turbinenrad (2) bildet zusammen mit einer drehfest an ihm angeschlossenen Kupplungsschale (4) ein Kupplungsgehäuse (5) aus, oder ist drehfest in ein Kupplungsgehäuse (5) eingesetzt, so dass das Pumpenrad (1) von dem Kupplungsgehäuse (5) im wesentlichen oder vollständig umschlossen wird;
1.5 im Kupplungsgehäuse (5) ist im Bereich seines äußeren Umfangs ein Fliehkraftventil (6) mit einem fliehkraftbetätigten Ventilkörper (6.1) angeordnet, welches derart in einen Auslaß (7) für Arbeitsmedium aus dem Arbeitsraum (3) geschaltet ist, dass der Ventilkörper (6.1) den Auslaß (7) im geschlossenen Zustand des Fliehkraftventils (6) im wesentlichen oder vollständig abdichtet, und im geöffneten Zustand freigibt, so dass Arbeitsmedium ausströmt;
**dadurch gekennzeichnet, dass**
1.6 der Ventilkörper (6.1) des Fliehkraftventils (6) ausschließlich auf seiner radial innenliegenden Seite mit Arbeitsmedium beaufschlagt ist, und auf seiner radial außenliegenden Seite ausschließlich durch wenigstens ein oder genau ein elastisches, mechanisches Druckelement (6.2), das in Schließrichtung des Fliehkraftventils (6) wirkt, beaufschlagt ist.

2. Hydrodynamische Kupplung gemäß Anspruch 1, **dadurch gekennzeichnet, dass** das Kupplungsgehäuse (5) im Bereich seines äußeren Umfangs einen mit Arbeitsmedium aus dem Arbeitsraum (3) befüllten Ringraum (8) ausbildet, in welchem der Auslaß (7) mit dem Fliehkraftventil (6) mündet.

3. Hydrodynamische Kupplung gemäß einem der Ansprüche 1 oder 2, **dadurch gekennzeichnet, dass** eine Vielzahl von Auslässen (7) mit jeweils einem entsprechend ausgeführten Fliehkraftventil (6) im Kupplungsgehäuse (5) angeordnet sind.

4. Hydrodynamische Kupplung gemäß einem der Ansprüche 1 bis 3, **dadurch gekennzeichnet, dass** zusätzlich zu dem oder den Auslässen (7) mit jeweils einem Fliehkraftventil (6) wenigstens ein weiterer Arbeitsmediumauslaß (9) oder eine Vielzahl von Arbeitsmediumauslässen (9) vorgesehen ist, welche frei von einem Fliehkraftventil sind und insbesondere einen stets geöffneten Querschnitt zum Auslassen von Arbeitsmedium aus dem Arbeitsraum (3) aufweisen.

5. Hydrodynamische Kupplung gemäß einem der Ansprüche 1 bis 4, **dadurch gekennzeichnet, dass** der Auslaß (7) mit dem Fliehkraftventil (6) gegenüber der Radialrichtung der hydrodynamischen Kupplung in Umfangsrichtung geneigt in das Kupplungsgehäuse (5) eingebracht ist, wobei die Neigung radial von außen nach innen gesehen in Drehrichtung des Turbinenrads (2) ausgeführt ist.

6. Hydrodynamische Kupplung gemäß einem der Ansprüche 4 oder 5, **dadurch gekennzeichnet, dass** der wenigstens eine weitere Arbeitsmediumauslaß (9) in Axialrichtung der hydrodynamischen Kupplung verlaufend in das Kupplungsgehäuse (5) eingebracht ist, insbesondere parallel zu der Drehachse der hydrodynamischen Kupplung oder im wesentlichen parallel zu der Drehachse der hydrodynamischen Kupplung.

7. Hydrodynamische Kupplung gemäß einem der Ansprüche 4 oder 5, **dadurch gekennzeichnet, dass** der wenigstens eine weitere Arbeitsmediumauslaß (9) in Radialrichtung der hydrodynamischen Kupplung verlaufend in das Kupplungsgehäuse (5) eingebracht ist, insbesondere senkrecht zu der Drehachse der hydrodynamischen Kupplung oder im wesentlichen senkrecht zu der Drehachse der hydrodynamischen Kupplung.

8. Hydrodynamische Kupplung gemäß einem der Ansprüche 1 bis 7, **dadurch gekennzeichnet, dass** der Auslaß (7) mit dem Fliehkraftventil (6) radial außerhalb des Turbinenrades (2), welches drehfest in das Kupplungsgehäuse (3) eingesetzt oder in dieses integriert ist, in dem Kupplungsgehäuse (5) insbesondere zusammen mit dem Ringkanal (8) eingebracht ist.

9. Hydrodynamische Kupplung gemäß einem der Ansprüche 1 bis 8, **dadurch gekennzeichnet, dass** der Ventilkörper (6.1) kugelförmig ist, insbesondere vollkugelförmig ist.

10. Hydrodynamische Kupplung gemäß einem der Ansprüche 1 bis 8, **dadurch gekennzeichnet, dass** der Ventilkörper (6.1) becherförmig, insbesondere mit einem hohlzylindrischen Querschnitt ist.

11. Hydrodynamische Kupplung gemäß einem der Ansprüche 1 bis 10, **dadurch gekennzeichnet, dass** das elastische, mechanische Druckelement (6.2) eine Druckfeder, insbesondere Spiraldruckfeder ist.

12. Hydrodynamische Kupplung gemäß einem der Ansprüche 3 bis 11, **dadurch gekennzeichnet, dass** die Fliehkraftventile (6) derart ausgeführt sind, insbesondere mit Ventilkörpern (6.1) verschiedener Massen und/oder elastischen, mechanischen Druckelementen (6.2) verschiedener Federstärken, dass einzelne oder Gruppen von Fliehkraftventilen (6) bei einer höheren Drehzahl des Kupplungsgehäuses (5) öffnen als ein oder mehrere andere Fliehkraftventile (6).

13. Hydrodynamische Kupplung gemäß einem der Ansprüche 1 bis 12, **dadurch gekennzeichnet, dass** wenigstens ein Einlaß (10) zum Zuführen von Arbeitsmedium in den Arbeitsraum (3) vorgesehen ist, und in dem wenigstens einen Einlaß ein Fliehkraftventil angeordnet ist, das in Abhängigkeit der Drehzahl des Pumpenrades (1) und/oder des Turbinenrades (2) den Einlaß (10) öffnet oder verschließt.

14. Hydrodynamische Kupplung gemäß einem der Ansprüche 4 bis 13, **dadurch gekennzeichnet, dass** der wenigstens eine weitere Arbeitsmediumauslaß (9) gegenüber der Radialrichtung der hydrodynamischen Kupplung in Umfangsrichtung geneigt in das Kupplungsgehäuse (5) eingebracht ist, wobei die Neigung radial von außen nach innen gesehen in Drehrichtung oder entgegen der Drehrichtung des Turbinenrads (2) ausgeführt ist.

15. Fahrzeugdruckluftsystem mit einem Antriebsmotor, insbesondere Verbrennungsmotor, und einem Luftverdichter, **dadurch gekennzeichnet, dass** in die Triebverbindung zwischen dem Antriebsmotor und dem Luftverdichter eine hydrodynamische Kupplung gemäß einem der Ansprüche 1 bis 14 geschaltet ist.

16. Fahrzeugkühlsystem mit einem Antriebsmotor, insbesondere Verbrennungsmotor, und einem Lüfter, **dadurch gekennzeichnet, dass** in die Triebverbindung zwischen dem Antriebsmotor und dem Lüfter eine hydrodynamische Kupplung gemäß einem der Ansprüche 1 bis 14 geschaltet ist.

17. Fahrzeugkühlsystem mit einem Antriebsmotor, insbesondere Verbrennungsmotor, und einer Kühlmediumpumpe, insbesondere Wasserpumpe, **dadurch gekennzeichnet, dass** in die Triebverbindung zwischen dem Antriebsmotor und der Kühlmediumpumpe eine hydrodynamische Kupplung gemäß einem der Ansprüche 1 bis 14 geschaltet ist.

## Claims

1. A hydrodynamic coupling, comprising
1.1. a pump wheel (1) which is or can be brought into driving connection with an engine;
1.2. a turbine wheel (2) which is or can be brought into driving connection with an engine;
1.3. the pump wheel (1) and the turbine wheel (2) jointly form a toroidal working chamber (3) which is or can be filled with a working medium in order to transfer driving power from the pump wheel (1) to the turbine wheel (2);
1.4. the turbine wheel (2) jointly forms a coupling housing (5) with a coupling shell (4) which is torsionally rigidly attached to the wheel or is inserted in a torsionally rigid manner in a coupling housing (5), so that the pump wheel (1) is enclosed by the coupling housing (5) either to a substantial extent or completely;
1.5. a centrifugal force valve (6) comprising a valve body (6.1) that is actuated using centrifugal force is located in the coupling housing (5) in the region of its outer circumference, which valve being switched in an outlet (7) for working medium from the working chamber (3) that the valve body (6.1) essentially or completely seals the outlet (7) when the centrifugal force valve (6) is in the closed state and releases said outlet when the valve is open, allowing the working medium to flow out;
**characterized in that**
1.6. the valve body (6.1) of the centrifugal force valve (6) is supplied with working medium exclusively on its radial inner face and its radial outer face is subjected exclusively to the action of an or precisely one elastic mechanical pressure element (6.2) which acts in the closing direction of the centrifugal force valve (6).

2. A hydrodynamic coupling according to claim 1, **characterized in that** the coupling housing (5) forms in the area of its outer circumference an annular chamber (8) which can be filled with working medium from the working chamber (3) and into which opens the outlet (7) with the centrifugal force valve (6).

3. A hydrodynamic coupling according to one of the claims 1 or 2, **characterized in that** a plurality of outlets (7) with a respectively arranged centrifugal force valve (6) each are arranged in the coupling housing (5).

4. A hydrodynamic coupling according to one of the claims 1 to 3, **characterized in that** at least one further working medium outlet (9) or a plurality of working medium outlets (9) are provided in addition to the outlet(s) (7) with a centrifugal force valve (6) each, which working medium outlets are free from a centrifugal force valve and especially comprises an always open cross section for enabling the outlet of working medium from the working chamber (3).

5. A hydrodynamic coupling according to one of the claims 1 to 4, **characterized in that** the outlet (7) with the centrifugal force valve (6) is introduced into the coupling housing (5) inclined in the circumferential direction against the radial direction of the hydrodynamic coupling, with the inclination, when seen radially from the outside to the inside, being provided in the rotational direction of the turbine wheel (2).

6. A hydrodynamic coupling according to one of the claims 4 or 5, **characterized in that** the at least one further working medium outlet (9) is introduced into the coupling housing (5) extending in the axial direction of the hydrodynamic coupling, especially parallel to the rotational axis of the hydrodynamic coupling or substantially parallel to the rotational axis of the hydrodynamic coupling.

7. A hydrodynamic coupling according to one of the claims 4 or 5, **characterized in that** the at least one further working medium outlet (9) is introduced into the coupling housing (5) extending in the radial direction of the hydrodynamic coupling, especially perpendicular to the rotational axis of the hydrodynamic coupling or substantially perpendicular to the rotational axis of the hydrodynamic coupling.

8. A hydrodynamic coupling according to one of the claims 1 to 7, **characterized in that** the outlet (7) with the centrifugal force valve (6) is introduced radially outside of the turbine wheel (2) in the coupling housing (5) especially together with the annular conduit (8), which turbine wheel is inserted in a torsionally rigid manner in the coupling housing (3) or is integrated in the same.

9. A hydrodynamic coupling according to one of the claims 1 to 8, **characterized in that** the valve body (6.1) is spherical, especially fully spherical.

10. A hydrodynamic coupling according to one of the claims 1 to 8, **characterized in that** the valve body (6.1) is cup-shaped, especially with a cross section of a hollow cylinder.

11. A hydrodynamic coupling according to one of the claims 1 to 10, **characterized in that** the elastic mechanic pressure element (6.2) is a pressure spring, especially a spiral pressure spring.

12. A hydrodynamic coupling according to one of the claims 3 to 11, **characterized in that** the centrifugal force valves (6) are arranged in such a way, especially with valve bodies (6.1) of different masses and/or elastic mechanical pressure elements (6.2) of different spring strengths, that individual or groups of centrifugal force valves (6) will open at a higher speed of the coupling housing (5) than one or several other centrifugal force valves (6).

13. A hydrodynamic coupling according to one of the claims 1 to 12, **characterized in that** at least one inlet (10) is provided for supplying working medium to the working chamber (3) and a centrifugal force valve is arranged in the at least one inlet, which valve will open or close the inlet (10) depending on the speed of the pump wheel (1) and/or the turbine wheel (2).

14. A hydrodynamic coupling according to one of the claims 4 to 13, **characterized in that** the at least one further working medium outlet (9) is introduced into the coupling housing inclined in the circumferential direction against the radial direction of the hydrodynamic coupling, with the inclination, when seen radially from the outside to the inside, being provided in the direction of rotation or against the direction of rotation of the turbine wheel (2).

15. A vehicle pneumatic system with a drive engine, especially an internal combustion engine, and an air compressor, **characterized in that** a hydrodynamic coupling according to one of the claims 1 to 14 is switched into the drive connection between the drive engine and the air compressor.

16. A vehicle cooling system with a drive engine, especially an internal combustion engine, and a fan, **characterized in that** a hydrodynamic coupling according to one of the claims 1 to 14 is switched into the drive connection between the drive engine and the fan.

17. A vehicle cooling system with a drive engine, especially an internal combustion engine, and a coolant pump, especially a water pump, **characterized in that** a hydrodynamic coupling according to one of the claims 1 to 14 is switched into the drive connection between the drive engine and the coolant pump.

## Revendications

1. Accouplement hydrodynamique
1.1 avec une roue de pompe (1) qui est ou peut être mise en relation d'entraînement avec un moteur d'entraînement ;
1.2 avec une roue de turbine (2) qui est ou peut être mise en relation motrice avec une machine de travail ;
1.3 la roue de pompe (1) et la roue de turbine (2) forment ensemble un espace de travail toroïdal (3) qui est rempli ou peut être rempli d'un fluide de travail pour transmettre une puissance motrice de la roue de pompe (1) à la roue de turbine (2) ;
1.4 la roue de turbine (2) forme avec le carter d'accouplement (4) qui lui est relié de manière fixe en rotation une boîte d'accouplement (5), ou est disposée de manière fixe en rotation dans une boîte d'accouplement (5), de sorte que la roue de pompe (1) est pour l'essentiel ou entièrement entourée par la boîte d'accouplement (5) ;
1.5 la boîte d'accouplement (5) contient, dans une partie de sa circonférence extérieure, une soupape centrifuge (6) avec un corps de soupape (6.1) actionné par la force centrifuge, qui est monté dans une sortie (7) de fluide de travail hors de l'espace de travail (3) de telle manière que le corps de soupape (6.1) ferme pour l'essentiel ou complètement la sortie (7) lorsque la soupape centrifuge (6) est fermée et la dégage lorsqu'elle est ouverte, de sorte que du fluide de travail peut sortir ;
**caractérisé en ce que**
1.6 le corps de soupape (6.1) de la soupape centrifuge (6) est exposé à l'action du fluide de travail exclusivement sur sa face intérieure dans le sens radial et exposé exclusivement, sur sa face extérieure dans le sens radial, à l'action d'au moins un ou exactement un élément de compression mécanique élastique (6.2), qui agit dans le sens de la fermeture de la soupape centrifuge (6).

2. Accouplement hydrodynamique selon la revendication 1, **caractérisé en ce que** la boîte d'accouplement (5) forme, au niveau de sa circonférence extérieure, un espace annulaire (8) rempli de fluide de travail provenant de l'espace de travail (3), dans lequel débouche la sortie (7) munie de la soupape centrifuge (6).

3. Accouplement hydrodynamique selon l'une des revendications 1 ou 2, **caractérisé en ce qu'**une pluralité de sorties (7) avec chacune une soupape centrifuge (6) de conception appropriée est disposée dans la boîte d'accouplement (5).

4. Accouplement hydrodynamique selon l'une des revendications 1 à 3, **caractérisé en ce qu'**outre la ou les sorties (7) avec chacune une soupape centrifuge (6), il est prévu au moins une autre sortie de fluide de travail (9) ou une pluralité de sorties de fluide de travail (9) qui sont dépourvues de soupape centrifuge et présentent en particulier une section toujours ouverte pour laisser le fluide de travail sortir de l'espace de travail (3).

5. Accouplement hydrodynamique selon l'une des revendications 1 à 4, **caractérisé en ce que** la sortie (7) avec la soupape centrifuge (6) est disposée dans la boîte d'accouplement (5) en étant inclinée dans le sens de la circonférence par rapport à l'orientation radiale de l'accouplement hydrodynamique, l'inclinaison, vue de l'extérieur vers l'intérieur dans le sens radial, étant orientée dans le sens de rotation de la roue de turbine (2).

6. Accouplement hydrodynamique selon l'une des revendications 4 ou 5, **caractérisé en ce qu'**au moins une autre sortie de fluide de travail (9) est ménagée dans la boîte d'accouplement (5) de façon à être orientée dans le sens axial de l'accouplement hydrodynamique, en particulier parallèlement à l'axe de rotation de l'accouplement hydrodynamique ou sensiblement parallèlement à l'axe de rotation l'accouplement hydrodynamique.

7. Accouplement hydrodynamique selon l'une des revendications 4 ou 5, **caractérisé en ce que** l'au moins une autre sortie de fluide de travail (9) est disposée dans la boîte d'accouplement (5) en étant orientée dans le sens radial de l'accouplement hydrodynamique, en particulier perpendiculairement à l'axe de rotation de l'accouplement hydrodynamique ou sensiblement perpendiculairement à l'axe de rotation de l'accouplement hydrodynamique.

8. Accouplement hydrodynamique selon l'une des revendications 1 à 7, **caractérisé en ce que** la sortie (7) avec la soupape centrifuge (6) est disposée à l'extérieur dans le sens radial de la roue de turbine (2), qui est installée de manière fixe en rotation dans la boîte d'accouplement (3) ou intégrée dans celle-ci, dans la boîte d'accouplement (5), en particulier avec le canal toroïdal (8).

9. Accouplement hydrodynamique selon l'une des revendications 1 à 8, **caractérisé en ce que** le corps de soupape (6.1) est sphérique, en particulier en forme de sphère entière.

10. Accouplement hydrodynamique selon l'une des revendications 1 à 8, **caractérisé en ce que** le corps de soupape (6.1) est en forme de godet, en particulier avec une section cylindrique creuse.

11. Accouplement hydrodynamique selon l'une des revendications 1 à 10, **caractérisé en ce que** l'élément de compression mécanique élastique (6.2) est un ressort de compression, en particulier un ressort de compression hélicoïdal.

12. Accouplement hydrodynamique selon l'une des revendications 3 à 11, **caractérisé en ce que** les soupapes centrifuges (6) sont conçues de telle manière, en particulier avec des corps de soupape (6.1) de masse différente et/ou des éléments de compression mécaniques élastiques (6.2) ayant des forces de ressort différentes, que certaines ou des groupes de soupapes centrifuges (6) s'ouvrent à une vitesse de rotation de la boîte d'accouplement (5) plus élevée que plusieurs ou d'autres soupapes centrifuges (6).

13. Accouplement hydrodynamique selon l'une des revendications 1 à 12, **caractérisé en ce qu'**au moins une entrée (10) est prévue pour l'introduction de fluide de travail dans l'espace de travail (3), et il est prévu disposée dans l'au moins une entrée une soupape centrifuge qui ouvre ou ferme l'entrée (10) en fonction de la vitesse de rotation de la roue de pompe (1) et/ou de la roue de turbine (2).

14. Accouplement hydrodynamique selon l'une des revendications 4 à 13, **caractérisé en ce que** l'au moins une autre sortie de fluide de travail (9) est ménagée dans la boîte d'accouplement (5) en étant inclinée par rapport à l'orientation radiale de l'accouplement hydrodynamique, l'inclinaison, vue de l'extérieur vers l'intérieur dans le sens radial, étant orientée dans le sens de la rotation ou en sens inverse de la rotation de la roue de turbine (2).

15. Circuit d'air comprimé de véhicule avec un moteur d'entraînement, en particulier un moteur à combustion interne, et un compresseur d'air, **caractérisé en ce qu'**un accouplement hydrodynamique selon l'une des revendications 1 à 14 est monté dans la transmission motrice entre le moteur d'entraînement et le compresseur d'air.

16. Système de refroidissement de véhicule avec un moteur d'entraînement, en particulier un moteur à combustion interne, et un ventilateur, **caractérisé en ce qu'**un accouplement hydrodynamique selon l'une des revendications 1 à 14 est monté dans la transmission motrice entre le moteur d'entraînement et le ventilateur.

17. Système de refroidissement de véhicule avec un moteur d'entraînement, en particulier un moteur à combustion interne, et une pompe à fluide de refroidissement, en particulier une pompe à eau, **caractérisé en ce qu'**un accouplement hydrodynamique selon l'une des revendications 1 à 14 est monté dans la transmission motrice entre le moteur d'entraînement et la pompe à fluide de refroidissement.
